# EUROPEAN PATENT APPLICATION

(11) **EP 4 287 135 A1**
(43) Date of publication of application: **06.12.2023**
(21) Application number: 22177028.2
(22) Date of filing: 02.06.2022
(51) Int. Cl.: G06V 10/10, G06V 20/58, G06V 10/82, G06T 3/40, G06T 7/11, H04N 5/232

(54) **EFFICIENT MULTIVIEW CAMERA PROCESSING FOR OBJECT DETECTION**

(71) Applicant: Continental Autonomous Mobility Germany GmbH, 85057 Ingolstadt (DE)
(72) Inventor: Mattyus, Gellert Sandor, 90411 Nürnberg (DE)
(74) Representative: Continental Corporation

(57) **Abstract**

The technical problem solved by the teaching of the present application is to efficiently detect one or more objects surrounding or in the environment of an observing object (e.g., a vehicle, a robot or the like) from multiple camera images captured from multiple cameras mounted on the observing object. In particular, the present invention addresses the problem of the association between objects detected in different camera images from different cameras (wherein these different cameras have fields of view that intersect), while reducing the required computation power and time. It teaches a multi-view object detection method, system, computer program and computer-readable storage medium comprising instructions for detecting objects in the surroundings of an observing object, wherein the method comprises the step of: capturing images from at least two cameras mounted on the observing object such that their fields of view intersect at least partially; determining two or more channel groups of cameras, wherein the channel groups are groups of one or more cameras which are determined such that an overlap of the image of the one or more cameras in the group is minimized; stitching, for each determined channel group of cameras, the captured images of the cameras of the determined channel group together to generate a composite image; processing, using a neural network, the composite image of each channel group to detect one or more surrounding objects in the composite images; assigning the one or more detected surrounding objects to different cameras and defining at least one association between at least two objects assigned to at least two different cameras, wherein the at least one association defines that the at least two objects assigned to at least two different cameras are the same surrounding object.

## Description

### Technical field

The present invention relates to detection technologies in particular to the detection of one or several objects in the periphery of another object from which the detection is performed (an observing object). This invention can be used in many fields of applications such as in robotics, where robots evolving in an environment can be provided with a function of detecting objects in their surroundings. Similarly, it can be applied in the field of transportations, in which a land vehicle such as an automotive or a truck can be the observing object and can be provided with a function of detection of the objects that are surrounding it (such as other vehicles of any other type, pedestrians, animals, ...). Further, this technology is not only about detecting the one or more objects surrounding the observing object, but also about recognizing the objects of the surrounding (i.e., being capable of determining some of their attributes such as their type, kind, etc.). A particularity of the teaching of the present invention is to make use of multiple cameras and a computing unit processing the images from the multiple cameras installed on the observing object.

The problem of detecting objects in the periphery of an observing object is well known in the art and several solutions have already been provided. However, none of them is fully satisfactory.

A first conventional approach consists in using a system with multiple cameras and a computing unit to process the image from the multiple cameras system. An object detector is run in each image independently. Subsequently, the object position is reconstructed in three dimensions (3D) for instance by taking the intersection of the camera rays and a ground plane. Further, objects are associated (merged) based on their distance in the three-dimensional space. This conventional approach is currently well known in the automotive industry, in particular for existing parking methods.

A second conventional approach relies also on a system with multiple cameras, however, in the second approach each camera image is individually processed, and the objects are matched based on an embedding feature predicted by a prediction network for each object. A distance (e.g., Euclidian) between the objects in different cameras is defined and the objects are matched to the ones with the closest distance.

A third conventional approach is absed also on a multiple camera system wherein the images are combined (fused) in a top-down view representation, for instance by projecting the pixels onto a ground plane. A transformer network is used to compute the correspondence between the vehicle frame and the camera images.

A fourth conventional approach makes use of a LIDAR (light detection and ranging) sensor. The object detection is performed based on the points cloud collected by the LIDAR sensor.

However, all these conventional approaches have drawbacks that limit their use.

Indeed, in the first approach when the images are computed independently using for instance a deep neural network (DNN), the backbone computation is carried out multiple times, even if there are large overlaps between cameras capturing redundant information (because their fields of view may intersect). Further, the three-dimensional reconstruction process may contain errors (for instance, due to an inaccurate plane assumption) resulting in further errors in the subsequent association/merging step.

In the case of the second approach, a deep neural network may have access to less information (only one image) instead of multiple images from different views and viewing an object from multiple view points could increase the robustness of the output of the deep neural network.

For the third approach, it is requested that the processing of the images by a deep neural network is performed both independently per camera image and in a vehicle frame. Computing correspondences between the vehicle frames and the camera images requires transformer networks. However, implementing these computations in an embedded hardware is challenging because the computation accelerator may not support it. Further, in the case of detecting an object on a larger distance, it will be necessary to extend the area where the deep neural network computations are performed in the vehicle frame. This results in increased computational requirements and makes the third approach unsuitable for embedded hardware due to the limited computing resources of the embedded hardware.

Finally, in the case of the fourth conventional approach, installing one or more LIDAR sensors on a vehicle is expensive and the complexity of that approach limit its applicability in consumer products. Further, vehicles of today's generation are very often already equipped with cameras capturing images of the vehicle's surroundings in order to assist the driver in its maneuvers. That is to say that normal cameras are already available, and it would be more cost efficient to make use of them instead of installing one or a constellation of LIDAR sensors around a vehicle that needs to be equipped with an object detection function.

"Joint Detection and Identification Feature Learning for Person Search" by Tong Xiao ET AL, CVPR 2017, relates to a deep learning framework for person search in different images. Instead of breaking it down into two separate tasks - pedestrian detection and person re-identification, the document proposes to jointly handle both aspects in a single convolutional neural network. An Online Instance Matching (OIM) loss function is proposed to train a network effectively, which is scalable to datasets with numerous identities.

"PIXOR: Real-time 3D Object Detection from Point Clouds" by Bin Yang ET AL. CVPR 2018, relates to addressing the problem of real-time 3D object detection from point clouds in the context of autonomous driving. The approach relies on utilizing the 3D data more efficiently by representing the scene from the Bird's Eye View (BEV), and proposes PIXOR, a proposal-free, single-stage detector that outputs oriented 3D object estimates decoded from pixel-wise neural network predictions.

"FisheyeMODNet: Moving Object detection on Surround-view Cameras for Autonomous Driving", by Marie Yahiaoui ET AL, ICCV 2019 Workshop on 360° Perception and Interaction, relates to Moving Object Detection (MOD) in the context of autonomous driving. An autonomous vehicle has to estimate collision risk with other interacting objects in the environment and calculate an optional trajectory. Collision risks are typically higher for moving objects than static ones due to the need to estimate the future states and poses of the objects for decision making. This is particularly important for near-range objects around the vehicle which are typically detected by a fisheye surround-view system that captures a 360_{°} view of the scene. The paper proposes a CNN architecture for moving object detection using fisheye images that are captured in an autonomous driving environment.

### Summary of the invention

A technical problem solved by the teaching of the present application is to efficiently detect one or more objects surrounding or in the environment of an observing object (e.g., a vehicle, a robot or the like) from multiple camera images captured from multiple cameras mounted on the observing object. In particular, the present invention addresses the problem of the association between objects detected in different camera images from different cameras (wherein these different cameras have fields of view that intersect), while reducing the required computation power and time.

The solution provided is performed by means of a method according to one of claims 1 to 11, a system according to claims 12 or 13, a computer program product according to the claim 14 or a computer-readable storage medium according to claim 15.

### Short description of the drawings

In the following detailed description, presently preferred embodiments of the invention are further described with reference to the following figures:
- Fig. 1: illustrates an upper view of a vehicle equipped with a multiple view detector comprising four cameras which are placed such that their fields of view are targeting the surroundings of the vehicle.
- Fig. 2: illustrates a method of detecting objects surrounding an observing object according to an embodiment of the present invention.
- Fig. 3: illustrates an approach for stitching images of cameras to form a composite image of a group channel.
- Fig. 4: illustrates the comparison of two composite images from two group channels showing the associations between the various detected objects in each composite image.
- Fig. 5: illustrates a multi-view object detection system according to an embodiment of the present invention.

### Detailed description of preferred embodiments

Hereinafter, the embodiments will now be described in detail with reference to the accompanying drawings. It should be noted that the same reference numerals are used to designate the same or similar elements throughout the drawings.

It is to be noted that the disclosure cannot be limited to the embodiment in which the idea of the disclosure is presented, and another embodiment included within range of idea of another backward disclosure or the present disclosure may be easily proposed by addition, change, deletion and the like of another element.

The terms used in this specification were selected to include current, widely used general terms. In certain cases, a term may be one that was arbitrarily established by the applicant. In such cases, the meaning of the term is defined in the relevant portion of the detailed description. As such, the terms used in the specification are not to be defined simply by the name of the terms but are to be defined based on the meanings of the terms as well as the overall description of the pre-sent disclosure.

The present application relates to a method and system for multi-view detection of objects in the surrounding of an observing object. Such an observing object can be any kind of moving object that needs to ascertain the type, the position and movements of other fixed or moving objects in its surroundings. That is to say that the teaching of the present application can be used for instance to equip robots in an industrial process, robots in hospitals or warehouses, or to equip vehicles such as cars, trucks, motorbikes, or any of the like. The solution presented in the present application is of particular interest in the context of autonomous driving of vehicles which need to ascertain the position and optionally movements of objects in their surroundings, such as other cars or vehicles, bikes, buses, pedestrians and/or animals. This approach aims at detecting an object, that is to say its size and position with regard to the observing object, and also optionally at recognizing objects when possible. For instance, the objects can be categorized in various categories/classes such as cars, bus, trucks, motorbikes, bikes, adult pedestrians, children pedestrian, animals, etc.

The present application makes use of a multi-view imaging system comprising at least two cameras which fields of view intersect. The present application provides a solution for the case where an object is detected in the intersected part of the fields of view captured by the two cameras. In such cases, the chances of detection are increased (the object will have more chance to be detected and recognized in at least in one of the two images). Further, in the cases the detection is performed on both images, then an association can be determined between the detected object in the first image and the detected object in the second image such that the system determines that the two detected objects are in fact the same object in the surrounding of the vehicle. This association allows for understanding the link between an object in the first image and the same object in the second image which may be captured in a different angle/view side. Such overlapping image situations occur often in the case where cameras pointing at overlapping fields of view are used as this allows for the detection of the distance between the detected object and the observing object.

The rest of the description will be directed toward an application where the system is mounted on a vehicle in the context of driving assistance and/or of automatic driving.

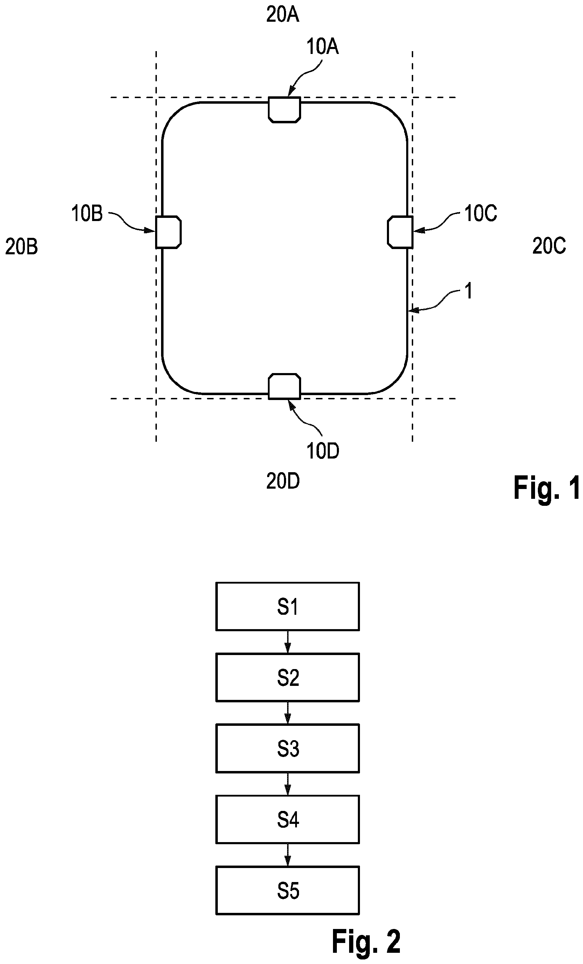

Fig. 1 illustrates a vehicle 1 which is equipped with cameras 10 which fields of view 20 targeting the surrounding of the vehicle 1. The cameras 10 can comprise any type of cameras and do not necessarily need to be all the same in terms of their features (sharpness, number of pixels, view angle, etc.). For instance, one of the cameras 10 can be a panoramic camera with a view angle of 200°, whilst the other one can be a fisheye camera. Each of these cameras 10 is configured to capture an image 30 in two dimensions of the environment in three dimensions surrounding the vehicle 1. The number of cameras 10 is not limited as long as there are at least two and as long as their captured images 30 at least partially intersect for ensuring the function of detecting the distance of a surrounding object 40 detected in the images 30. The distribution of the cameras 10 around the vehicle 1 can be regular or irregular. That is to say that they can be distributed regularly at a same angular distance around the vehicle 1 or irregularly, with areas around the vehicle 1 that may have a higher number of cameras 10 capturing images 30, resulting in some directions around the vehicle 1 being monitored by more cameras 10 than others (for instance the face and the back of the vehicle 1 can be equipped with more cameras 10). In the example presented in Fig. 1, the vehicle 1 comprises four camera 10 positioned as follows: one camera 10A on the front side, one camera 10B on the back side, one camera 10C on the right side and one camera 10D on the left side of the vehicle 1. In this illustrative example, each of the cameras 10 has a viewing angle of 180°.

In a preferred embodiment, the cameras 10 are calibrated to ensure that their exact position in the 3D referential of the vehicle 1 is determined and known by the multi-view object detection system 2. In an even more preferred embodiment, the cameras 10 are calibrated such that their directions and fields of view are determined precisely and known by the multi-view object detection system 2.

It is pointed out that different camera configurations of the camera 10 can be considered. For instance, there can be two front cameras with similar fields of view, whilst still having four large field of view cameras (front, back, left and right). Similarly, there can be two front facing cameras, four surround view cameras, a left and a right-side camera plus a rear camera, i.e. a total of nine cameras.

Fig. 2 illustrates the basics steps of a method of detecting objects surrounding an observing object 1 according to an embodiment of the present invention.

In a first step S1 of capturing images, four cameras 10A, 10B, 10C and 10D of the vehicle 1 are used to capture images 30A, 30B, 30C, 30D of their different field of views 20A, 20B, 20C, 20D. Ideally, the different images from the different cameras 10 are taken at similar times or substantially the same time. For instance, in an embodiment, the images from the various images can be taken with a time difference of less than 1 second, more preferably less than 50 ms, even more preferably less than 5 milliseconds.

In a second step S2, two or more channel groups of cameras are determined. The channel groups are groups of one or more cameras 10 which are determined such that the overlap of images in the group is minimized. That is to say that the cameras 10 are grouped such that the images of the one or more cameras 10 selected have a limited intersection (in other words, the size of the areas of the environment surrounding the vehicle 1 that would be captured by cameras 10 of the same group is minimized). In a preferred embodiment, the groups can also be defined to maximize the size (the width) of the field of view captured by the cameras 10 of each group, whilst still minimizing the overlaps. In the present example of Fig. 1, two channel groups are created: one front/back and one left/right, as each of the cameras 10 has a 180°-degree field of view. By this means, the overlap of image within each channel is minimized and each channel group has a combined field of view of virtually 360° (it would be exactly the case if the cameras were placed at substantially the same position). To perform this channel grouping, the images captured by each camera 10 can be warped into a (vertical) cylindrical projected image or said differently, each image can be positioned in a panorama image with reference the each other or with reference to a pre-determined shared reference (for instance, a pre-defined center point, such as a center front pixel or the point corresponding to 0° and an horizontal direction). By this means, the image overlaps are easy to determine. Similarly, an automatic calculation can be made to minimize the surface of overlap picture in each group whilst maximizing the angular width.

In a third step S3, for each channel group of cameras, the captured images are stitched together to generate a composite image. That is to say that the captured images from the one or more cameras 10 of the same channel group are attached together by their sides in order to form a panoramic image for this group channel which is a composite image of this channel group. In the illustrated example, there is a first composite image 31 for the first channel group corresponding to the front/back cameras, and a second composite image 32 for the second channel group corresponding to the left/right cameras. It is of note that it is possible that there can be only two channel groups and that there is only one camera 10 in each of these groups. In case that there is only one camera 10 in a channel group, the composite image of the group will be identical with the image captured by the respective camera 10 of the channel group and that there will be no image stitching. In another embodiment, there are at least two cameras 10 in at least one of the channel groups.

In a possible embodiment, the different group channels are concatenated, resulting in an image with multiple input channels (e.g., 6 when two channel groups with RGB channels are concatenated). The resulting image is also a composite image.

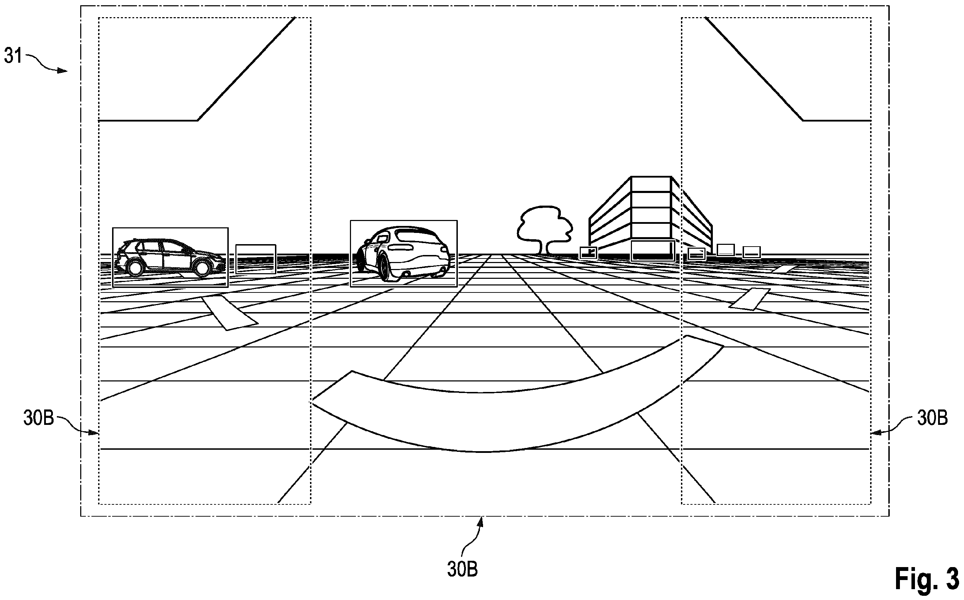

Fig. 3 illustrates an approach for stitching the image of cameras 10 to form a composite image of a group channel. In this example, the image from the front camera is positioned in the middle of the panoramic image, and the image from the back camera is cut in two and each part is stitched by a side to the corresponding side of the image of the front camera, such that a panoramic image is obtained for the composite image of the first channel group.

In a fourth step S4, a neural network such as a deep neural network is used to process the combined images of each channel. The neural network merges the channels doing the computations (e.g., in the first convolution operation, or after doing a few layers of processing on the channels separately). After the merging of the channels, all the computations are shared between the channel groups: this is referred to as the backbone of the neural network. In order to produce interpretable outputs, the neural network has different headers. One header is for detecting objects as bounding boxes (center heatmap, center offset, box size) for each combined image of each channel group. A CenterNet method can be used to perform this step, such as the one described in "Objects as points" by Xingyi Zhou ET AL in arXiv preprint arXiv:1904.07850, published on 2019/4/16. A second header can be an offset header providing offset of the center position in one channel group and the other. This is similar to the method of CenterTrack such as the one described in "Tracking Objects as Points" by Xingyi Zhou ET AL in arXiv preprint arXiv:2004.01177, submitted on April 2, 2020.

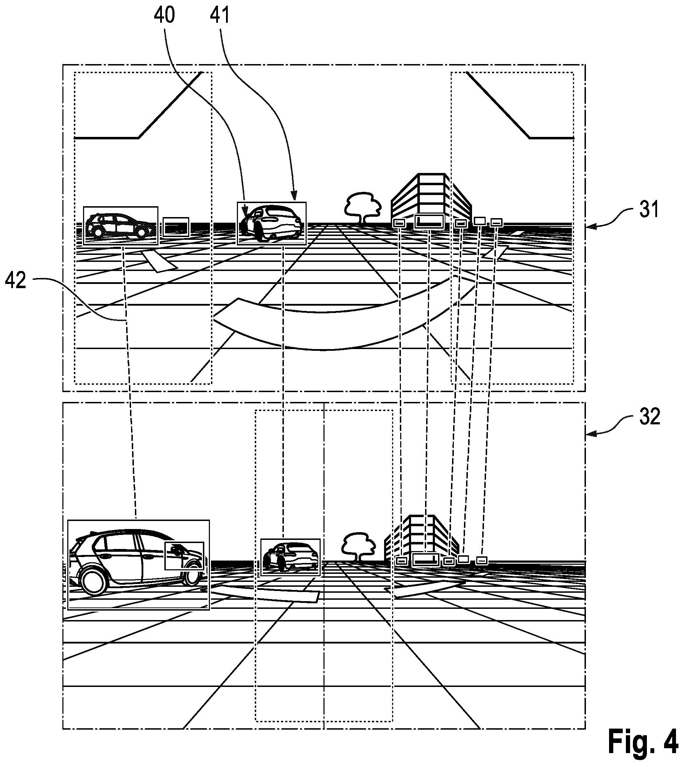

In a fifth step S5, a step of assigning the objects to the different cameras 10 is performed. This step can be performed by defining a matching cost metric for each possible object correspondence between the different cameras. For instance, this cost metric can be based on distances between points such as the centers and corresponding offsets. An assignment between the objects in different channel groups which minimizes the sum of the matching costs is then searched. This can be achieved by known approaches such as a greedy matching (the object with the lowest cost is assigned and removed from the set) or by using the Hungarian Algorithm or the so-called Hungarian method which is a combinatorial optimization algorithm that solves the assignment problem in polynomial time. This step allows to define the above-mentioned association 42 between the detected objects in the different captured images. For instance, if a car is detected as an object in the surrounding of the observing vehicle 1, it is possible that its image is captured by different cameras 10 of the observing vehicle 1(in our case, the front and right camera can capture an object having a position in an azimuth 35° of the observing vehicle 1). This step will ensure that there is an association 42 between the cars detected in the two captured images, such that the system can determine that it is the same car. Fig. 4 illustrates the comparison of two composite images 31, 30 according to the embodiment of Fig. 1 with four cameras and two channel groups showing the associations 42 between the various detected objects 40 highlighted in their bounding box 41 in each composite image.

In an optional step, a triangulation can be done to recover a 3D distance of the detected objects. When the step of assigning the objects provides the pixel coordinates of an object in two or more images, this information can be used to infer 3D information. The detection of each object in an image involves use of a three dimensional (3D) rays. In such a case, the object 3D position is the point minimizing the distance to these 3D rays. This can be easily computed by application of a least squares estimation.

In an embodiment, the neural network can be trained. This training can be performed similarly to the standard CenterNet configuration, but the ground truth is applied for each corresponding channel group header, e.g., the left camera ground truth is used to train the left-right network header. Labeled ground truth objects are required for each input image. The offset header is trained similarly to the CenterTrack approach. An L1 loss is computed between the predicted and the ground truth offset. The ground truth for this comes from the labeled objects in each image. The ground truth requires that the objects correspondences between the cameras are annotated. This training can be performed in a data center.

In an optional step of the method, the output of the detection can be used to trigger an emergency brake of the vehicle 1 if it is determined that a collision with a detected object will likely occur.

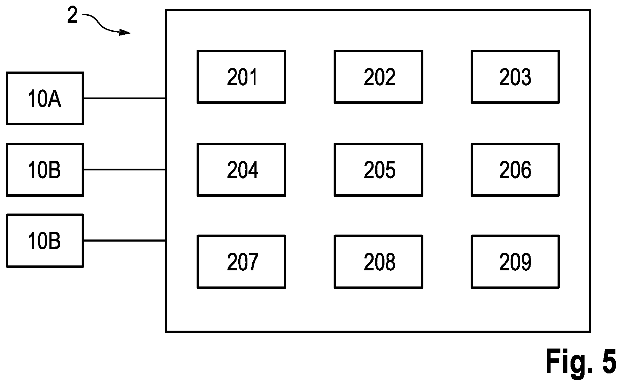

In another aspect, the present invention is a multi-view object detection system 2 which can be installed on an observing object such as a vehicle 1. This system is illustrated in Fig. 5 and is configured for performing the method above described.

The multi-view object detection system 2 comprises two or more cameras 10 and a processing unit which can comprise a processor 201 and a memory 202. The two or more cameras 10 can be mounted on an observing object 1. The memory can be used to store computer readable instructions to be performed by the processing unit and/or to store the captured images 30 and/or the composite images 31, 32.

The processing unit of the multi-view object detection system 2 comprises an image capturing module 203, configured to receive images 30 captured by the cameras 10.

The processing unit of the multi-view object detection system 2 comprises a channel group determination module 204 configured for determining two or more channel groups of cameras 10 as described above.

The processing unit of the multi-view object detection system 2 comprises a stitching module 205 configured for stitching the images of cameras 10 to form a composite image of a group channel as described above.

The processing unit of the multi-view object detection system 2 comprises a neural network module 206 configured for processing the combined images of each channel as described above.

The processing unit of the multi-view object detection system 2 comprises an object assignment module 207 configured for assigning the objects to the different cameras 10 as described above.

Optionally, the processing unit of the multi-view object detection system 2 comprises a triangulation module 208 for performing a triangulation as described above.

Optionally, the processing unit of the multi-view object detection system 2 comprises also a calibration module 209 for calibrating the cameras 10 of the system, that is to say for ensuring that their exact position in the 3D referential of the observing object 1 on which the system is installed are determined and known by the multi-view object detection system 2. In an even more preferred embodiment, the calibration module 209 can calibrate the cameras 10 such that their directions and fields of view are determined precisely and known by the multi-view object detection system 2.

In an aspect, the present invention is a software or computer program to be installed in the memory of a system connected to at least two cameras 10 mounted on an observing object, wherein the software comprises computer readable instructions which when used on a computer cause the computer to perform the above-described steps of the method.

Another aspect of the present invention is a computer-readable storage medium, wherein computer-readable instructions are stored therein for performing the steps of the above-described method when run on a computer connected to at least two cameras 10 mounted on an observing object 1.

The present invention has the following advantages over the prior art solutions.

Firstly, it has the advantage of an efficient computation: the backbone computation is less than with independent images (e.g.; 1/ 2. For the configuration of four cameras -10 left, front, right, rear-), since this computation is only executed once for the overlapping areas.

Secondly, the input to the neural network contains more information because it can combine multiple views. Consequently, an object can be detected more robustly if it is seen from multiple views.

Thirdly, the neural network provides the offset which is used for association of the objects between different views. As the neural network has access to both image views it can infer complex relations (e.g. between similarly looking objects which otherwise would be difficult to distinguish).

And finally, this method provides the association of detected objects between different camera views and it can remove double detections. The association between objects allows direct 3D reconstruction via multi-view geometry.

### List of Reference Signs

1: Vehicle/observing object
2: Multiview object detection system
10, 10A, 10B, 10C, 10D: Cameras
20, 20A, 20B, 20C, 20D: Fields of view
30, 30A, 30B, 30C, 30D: Captured images
31, 32: Composite images
40: Surrounding object
41: Bounding box
42: Association
201: Processor
202: Memory
203: Image capturing module
204: Channel group determination module
205: Stitching module
206: Neural network module
207: Object assignment module
208: Triangulation module
209: Calibration module
S1: Image capturing step
S2: Channel group determination step
S3: Composite image generation step
S4: Step of processing the composite images of each channel by a neural network
S5: step of assigning the objects to the different cameras

## Claims

1. A multi-view object detection method for detecting objects (40) in the surroundings of an observing object (1), wherein the method comprises the steps of:
capturing (S1) images (30) by at least two cameras (10) mounted on the observing object (1) such that their respective fields of view (20) intersect at least partially;
determining (S2) two or more channel groups of cameras (10), wherein the channel groups are groups of one or more cameras (10) which are determined such that an overlap of the images (30) captured by the one or more cameras (10) in the group is minimized;
stitching (S3), for each determined channel group of cameras (10), the captured images (30) of the cameras (10) of the determined channel group together to generate a composite image (31, 32);
processing (S4), using a neural network, the composite image (31, 32) of each channel group to detect one or more surrounding objects (40) in the composite images (31, 32);and
assigning (S5) the one or more detected surrounding objects (40) to different cameras (10) and defining at least one association (42) between at least two objects assigned to at least two different cameras (10), wherein at least one association (42) defines that the at least two objects assigned to at least two different cameras (10) are the same surrounding object (40).

2. The multi-view object detection method of claim 1, further comprising a step of performing a triangulation to determine a 3D distance of the one or more surrounding detected objects (40) from their assigned cameras (10).

3. The multi-view object detection method of claim 1 or 2, further comprising a step of calibrating the cameras (10) to determine their position in a 3D referential of the observing object (1).

4. The multi-view object detection method of claim 3, further comprising the step of determining a 3D position of the one or more detected surrounding objects (40) in the 3D referential of the observing object (1).

5. The multi-view object detection method according to one of the preceding claims, wherein including the use of at least three cameras (10), preferably at least four cameras (10), mounted on the observing object (1), wherein the images of these three, or preferably four, cameras (10) are captured in the step of capturing (S1) the images by the cameras (10).

6. The multi-view object detection method according to claim 5, wherein in the step of determining (S2) two or more channel groups of cameras (10), at least one channel group comprises at least two cameras (10).

7. The multi-view object detection method according to one of the preceding claims, wherein the step of determining (S2) two or more channel groups of cameras (10) further comprises determining the channel groups so as to maximize the size of the field of view captured by the camera of each group, whilst still minimizing the overlaps.

8. The multi-view object detection method according to one of the preceding claims, wherein the step of stitching (S3) is performed by attaching the captured images (30) of a same channel group together by their sides to obtain a panoramic image as the composite image (31, 32).

9. The multi-view object detection method according to one of the preceding claims, wherein the step of assigning (S5) the detected surrounding objects (40) to the different cameras (10) is performed by defining a matching cost metric for each possible object association (42) between the different cameras (10) and performing the assignment of the detected surrounding objects (40) by searching to minimize the sum of the matching cost metrics.

10. The multi-view object detection method according to one of the preceding claims, wherein the observing object (1) comprises a vehicle such as a car or a truck.

11. The multi-view object detection method according to one of the preceding claims, wherein the output of the detection method is further used to trigger an emergency brake of the observing object (1) if it is determined that a collision of the observing object (1) with a detected object (40) will occur.

12. A multi-view object detection system (2) for an observing object (1), comprising a processing unit, wherein the processing unit comprises:
an image capturing module (203), configured for capturing captured images (30) from at least two cameras (10) mounted on the observing object (1) such that their fields of view (20) intersect at least partially;
a channel group determination module (204) configured for determining two or more channel groups of cameras (10), wherein the channel groups are groups of one or more cameras (10) which are determined such that an overlap of the image of the one or more cameras (10) in the group is minimized;
a stitching module (205) configured for, for each determined channel group of cameras (10), stitching the captured images (30) of the cameras (10) of the determined channel group together to generate a composite image (31, 32);
a neural network module (206) configured for processing the composite images (31, 32) of each channel group using a neural network to detect one or more surrounding objects (40) in the composite images (31, 32);
an object assignment module (207) configured for assigning the one or more detected surrounding objects (40) to different cameras (10) and defining at least one association (42) between at least two objects assigned to at least two different cameras (10), wherein the at least one association (42) defines that the at least two objects assigned to at least two different cameras (10) are the same surrounding object (40).

13. The multi-view object detection system (2) according to claim 12, further comprising the at least two cameras (10).

14. A computer program product for performing steps of the multi-view object detection method according to any one of the claims 1-11 when used on a computer system connected to at least two cameras (10) mounted on the observing object (1).

15. A computer-readable storage medium, wherein the computer-readable instructions are stored therein for performing the steps of the method according to any one of the claims 1-11, when run on a computer system connected to at least two cameras (10) mounted on the observing object (1).
